# EUROPEAN PATENT SPECIFICATION

(11) **EP 0 715 477 B1**
(45) Date of publication and mention of the grant of the patent: **02.01.2004**
(21) Application number: 95118752.5
(22) Date of filing: 29.11.1995
(51) Int. Cl.: H04Q 7/30, H01Q 3/24, H04Q 7/38, H04Q 7/36

(54) **Modular interconnect matrix for matrix connection of a plurality of antennas with a plurality of radio channels units**
Modulare Verbindungsmatrix für die matrische Verbindung von Antennen mit Funkkanaleinheiten
Matrice d'interconnection modulaire pour la connection matricielle d'une pluralité d'unités de canaux radio

(30) Priority: 01.12.1994 US 348045
(43) Date of publication of application: 05.06.1996
(73) Proprietor: Radio Frequency Systems Inc., Marlboro, NJ 07746-1899 (US)
(72) Inventor: Meredith Sheldon K., Phoenix, Arizona 85044 (US); Steele, Walter B., Phoenix, Arizona 85037 (US)
(74) Representative: Döring, Roger, Dipl.-Ing.

(56) References cited:
- EP-A- 0 439 939

## Description

### Technical Field

The present invention relates to the interconnection of radios with antennas, and more particularly, to a modular interconnect matrix for the matrix connection of any one of a plurality of radios with any one of a plurality of antennas.

### Background of the Invention

In a land mobile radio base site, a number of antennas are typically used to transmit and receive RF signals for a plurality of radio channel units (radios). In such known systems, each radio channel unit comprises a transmitter section for the generation and transmission of RF signals at the operating frequency of the radio channel unit and a receiver section for receiving RF signals at the operating frequency of the radio channel unit.

For the transmission of RF signal, each antenna is connected to one or more of the radio channel units for transmitting signals provided by the transmitter section of the corresponding radio channel units. If more than one radio channel unit is designated to transmit RF signals via a single antenna, the RF signals provided by the radio channel units are combined in a combiner, and the combined RF signals are provided by the combiner to the antenna for transmission thereof.

For the receipt of RF signals, each antenna is connected to one or more of the radio channel units for providing received RF signals to the receiver section of the radio channel units. If the antenna is designated to provide received RF signals to more than one radio channel unit, the output of the antenna is connected to a splitter which splits the received RF signal from the associated antenna into a plurality of equal power parts. The parts of the received RF signal are then provided to the associated radio channel units. If the radio channel unit comprises a diversity receiver, e.g., a receiver having two inputs and capable of selecting the strongest RF signal between the two RF signals for demodulation, then the radio channel unit is connected to two antennas.

In the above described land mobile radio base site, each radio channel units is directly connected to one or two dedicated antennas for the transmission and receipt of RF signals. Therefore, the antennas used must have generally omni-directional characteristics to ensure the proper receipt of RF signals from, and the transmission of RF signals to, mobile radios (mobile subscribers).

It is generally known that improved transmission and receipt of RF signals between a radio channel unit at a mobile radio base site and a mobile subscriber may be achieved using an array of directional antennas at the mobile radio base site. However, in such a mobile radio base site having a large number of radio channel units, e.g., 60 radio channel units, and a large number of directional antennas, e.g., 16 directional antennas, a significant problem exists with respect to interconnecting the transmitter section and receiver section of the radio channel units to the directional antennas for optimal transmission and receipt of RF signals, respectively.

A radio network with switching arrangement for coupling radios to a selected antenna out of a plurality of antennas is disclosed in EP 0 439 939.

### Summary of the Invention

Objects of the invention include a modular interconnect matrix for matrix connection of any one of a plurality of radio channel units with any one of a plurality of antennas.

Another object of the present invention is to provide a modular interconnect matrix having a plurality of modules which may be quickly assembled for matrix connection of a plurality (N) of antennas with a plurality (M) of radio channel units.

A further object of the present invention is to provide a modular interconnect matrix with modules having coaxial quick-disconnect connectors for matrix connection of a plurality (N) of antennas with a plurality (M) of radio channel units.

Another object of the present invention is to provide a modular interconnect matrix having a plurality of modules which are easy and economical to manufacture, and which provide for easy assembly for the matrix connection of a plurality (M) of radio channel units with a plurality (N) of antennas.

A still further object of the present invention is to provide a modular interconnect matrix for dynamically connecting a receive terminal of each one of a plurality of radio channel units with any one of a plurality of antennas which, on average during a sampling period, has the strongest received signal strength of RF signals at the operating frequency of the one radio channel unit.

Another object of the present invention is to provide a modular interconnect matrix for dynamically interconnecting a transmit terminal of each one of a plurality of radio channel units with any one of a plurality of antennas which, on average during a sampling period, is best suited for transmitting RF signals at the operating frequency of the one radio channel unit in a direction corresponding to the desired destination for the transmitted RF signals.

According to the present invention, a modular interconnect matrix interconnects a plurality (M) of radio channel units with a plurality (N) of antennas; each radio channel unit is connected to a first connector on a corresponding first switching module having a plurality (N) of seconds connectors, and each antenna is connected to a first connector of a corresponding antenna interface module having a plurality (X) of second connectors; the second connectors on the first switching modules are configured for interconnection with the second connectors on the antenna interface modules and the second connectors on the modules are arranged for interconnection of at least one second connector on each of the first switching modules with at least one second connector on each of the antenna interface modules; each of the first switching modules provides for the connection of the first connector with any one of the second connectors, thereby allowing each radio channel unit to be interconnected to any one of the antennas.

In further accord with the present invention, a switch control is provided which controls the interconnection of the first connector to any one of the second connectors on the first switching modules.

According further to the present invention, a pair of modular interconnect matrices are provided including a radio signal transmit modular interconnect matrix for interconnecting a transmit terminal of each one of the radio channel units with any one of the antennas for the transmission of RF signals, and a radio signal receive modular interconnect matrix for interconnecting a receive terminal of each one of the radio channel units with any one of the antennas for providing RF signals received by the antennas to the corresponding radio channel units.

According still further to the present invention, in the radio signal receive modular interconnect matrix, the first connector on each first switching module is connected to a receive connector on the corresponding radio channel unit, and each antenna interface module is a splitter which divides a signal received from the corresponding antenna into a plurality (X) of divided signals each having an equal signal strength which is a fraction (1/X) of the received signal strength.

In still further accord with the present invention, the switch control comprises a plurality (Y) of second switching modules having a plurality (N) of second connectors and a first connector connected to a scanning receiver, each scanning receiver being associated with corresponding ones of the radio channel units; the second connectors on the second switching modules are configured for interconnection with the second connectors on the antenna interface modules and the second connectors on the modules are arranged for interconnection of at least one second connector on each second switching module with at least one second connector on each of the antenna interface modules. Each second switching module is configured for interconnecting each scanning receiver with any one of the antennas, and each scanning receiver provides output data signals to a micro-controller indicative of the received signal strength on each of the antennas at the operating frequencies of the corresponding ones of the radio channel units for determining the antenna having the strongest signal strength at the assigned frequency of the corresponding ones of the radio channel units, the micro-controller further providing control signals to the first switching modules for interconnecting each radio channel unit with the antenna indicated as having the strongest signal strength at the operating frequency of the radio channel unit.

According further to the present invention, in the radio signal transmit modular interconnect matrix, the first connector on each first switching module is connected to a transmit connector on the corresponding radio channel unit, and each antenna interface module is a combiner which combines RF signals provided on its second connectors from the radio channel units into a combined RF signal which is provided to a corresponding antenna via the antenna interface module second connector.

According further to the present invention, each radio channel unit has a diversity receiver capable of receiving signals from two antennas and determining the signal having the strongest signal strength, and each first switching module in a radio signal receive modular interconnect matrix is provided with two first connectors for interconnection with the two diversity receiver connectors of the corresponding radio channel unit diversity receiver, the micro-controller provides control signals to the first switching modules indicative of the two antennas having the stronger signal strength at the operating frequency for each of the associated radio channel units, and the first switching modules interconnect one of the first connectors with the antenna having the strongest signal strength and the other of the first connectors with the antenna having the second strongest signal strength.

In still further accord with the present invention, the micro-controller controls each first switching module in the radio signal transmit modular interconnect matrix such that the first connector is interconnected with the antenna indicated as having the strongest signal strength when a signal is received for the corresponding radio channel unit in the radio signal receive modular interconnect matrix.

The present invention provides a significant improvement over the prior art by providing a modular interconnect matrix between a plurality of radio channel units and a plurality of antennas. Such a modular interconnect matrix allows for the use of a plurality of directional antenna at a land mobile radio base site for improved transmission and receipt of RF signals. Additionally, the modular components which make up the matrix may be easily manufactured and tested, and therefore provide a simple and economical means of interconnecting radio channel units with antennas. The modular units of the modular interconnect matrix are easy to assemble, and provide a reliable connection between any one radio channel unit with any one antenna.

The foregoing and other objects, features and advantages of the present invention will become more apparent in light of the following detailed description of exemplary embodiments thereof, in view of the accompanying drawings.

### Brief Description of the Drawings

Figure 1 is a schematic block diagram of the modular interconnect matrix of the present invention;
Figure 2 is a perspective view of a splitter/combiner module of the modular interconnect matrix of Figure 1;
Figure 3 is a perspective view of a first switching module of the modular interconnect matrix of Figure 1;
Figure 4 is a perspective view of a second switching module of the modular interconnect matrix of Figure 1;
Figure 5 is a perspective view of the modular interconnect matrix of Figure 1;
Figure 6 is a side view of a coaxial quick-disconnect connector;
Figure 7 is a side view of a coaxial quick-disconnect connector;
Figure 8 is a schematic block diagram of a modular interconnect matrix used for transmitting RF signals;
Figure 9 is a schematic block diagram of a first alternative embodiment of the modular interconnect matrix of Figure 1; and
Figure 10 is a schematic block diagram of a second alternative embodiment of the modular interconnect matrix of Figure 1.

### Best Mode for Carrying Out the Invention

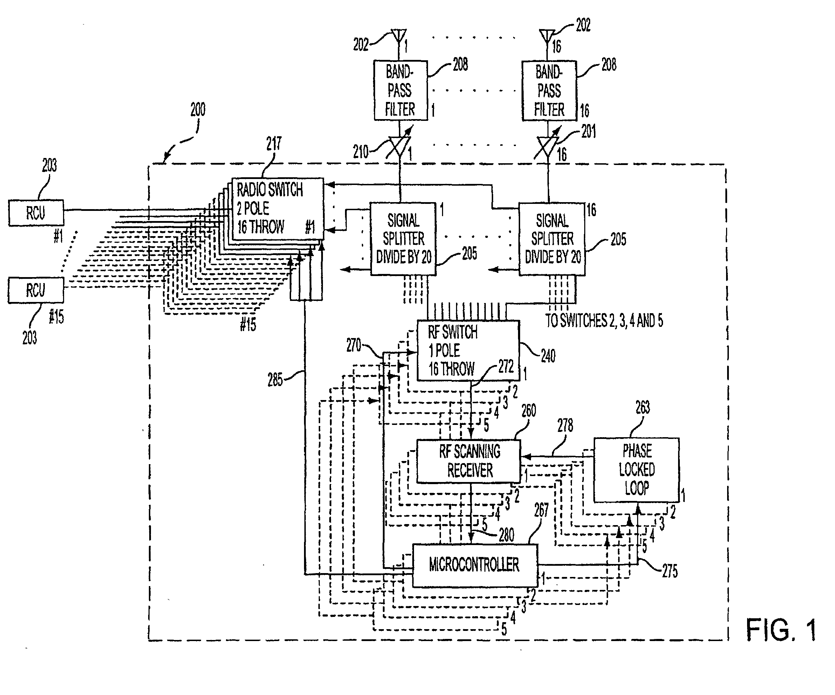

Referring to Figure 1, the modular interconnect matrix 200 is used to interconnect a plurality (N) of antennas 202 to a plurality (M) of a radio channel units 203. Figure 1 is an example of a radio signal receive modular interconnect matrix, e.g., a modular interconnect matrix which is used to provide signals received on antennas 202 to receive terminals mounted on the radio channel units 203. Although the invention is described and illustrated in Figure 1 with respect to the receipt of signals by the radio channel units, the invention is equally applicable to the transmission of RF signals provided by the radio channel units, as will be described in greater detail hereinafter.

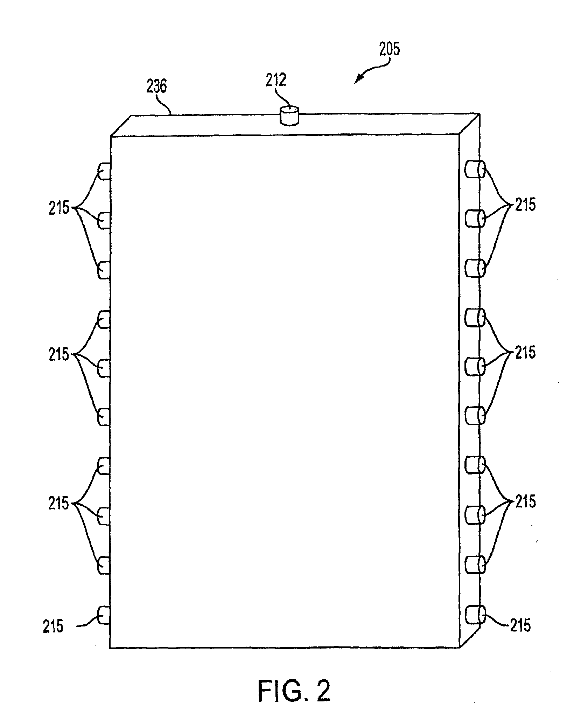

The modular interconnect matrix 200 comprises a plurality (N) of signal splitter modules 205, one signal splitter module 205 being associated with each of the antennas 202. Each antenna 202 is connected to its associated signal splitter modules 205 via a band pass filter 208 and an adjustable preamplifier 210 which amplifies the received signals before being provided to the signal splitters 205. In Figure 1, sixteen (16) antennas 202 are shown interconnected to sixteen (16) signal splitter modules 205. The signal splitter modules 205 are power dividers which divide the amplified RF signals into a plurality (X) of equal parts, e.g., each of the equal parts has an identical signal characteristic (shape) as the amplified RF signal at a fraction (1/X) of the signal strength. For example, a 20-way power divider having a frequency range of 824 to 894 MHZ and an insertion loss of 16dB may be selected for use as a signal splitter. In Figure 2, each signal splitter module 205 is illustrated as dividing the received RF signal into 20 equal parts.

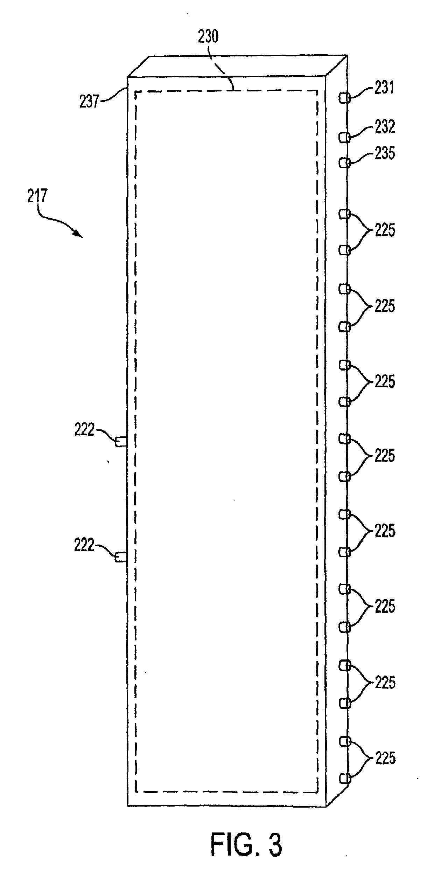

Referring also to Figure 2, the signal splitter module 205 comprises an input connector 212 where the amplified signals provided by the antenna are input to the signal splitter module 205. The signal splitter module 205 also comprises a plurality (X) of output connectors 215 where the equal parts of the amplified RF signals are provided. Figure 3 illustrates the signal splitter module 205 having 20 output connectors.

Referring again to Figure 1, the modular interconnect matrix 200 also comprises a plurality (M) of first switching modules (radio switching modules) 217. There is one first switching module 217 associated with each radio channel unit 203. Referring also to Figure 3, each of the first switching modules 217 comprises a pair of first connectors 222 for interconnection with a pair of receiver connectors on the corresponding radio channel unit 203 (Figure 1). Each first switching module 217 also comprises a plurality (N) of second connectors 225. Each of the first connectors 222 and second connectors 225 are connected to an electronic switch 230 located within the first switching module 217. The electronic switch 230 is also connected to a ground connector 231, a power supply connector 232 and a control connector 235 mounted on the first switching module 217. As will be described in greater detail hereinafter, the electronic switch 230 is a 2-pole-N-throw switch which operates under control of control signals provided to the control connector 235 for connecting each one of the first connectors 222 to one of the second connectors 225. The electronic switch 230 may be a two-pole-sixteen-throw electronic switch SW9481 manufactured by the Celwave Division of Radio Frequency Systems, Inc., which is powered by a 15VDC power supply and is controlled by a pulse width modulated data stream containing both timing (clock) data and control (switching) data.

Referring now to Figures 1, 2, 3 and 5, the second connectors 215, 225 on both the signal splitter modules 205 and the first switching modules 217 are configured and arranged such that each one of the second connectors 225 on the first switching modules 217 may be interconnected to one second connector 215 on each signal splitter module 205. It will therefore be understood by those skilled in the art that using the above described arrangement, each one of the first switching modules 217 is provided with a portion (1/X) of the RF signal output of each antenna 202 due to the matrix interconnection of the first switching modules 217 with the signal splitter modules 205.

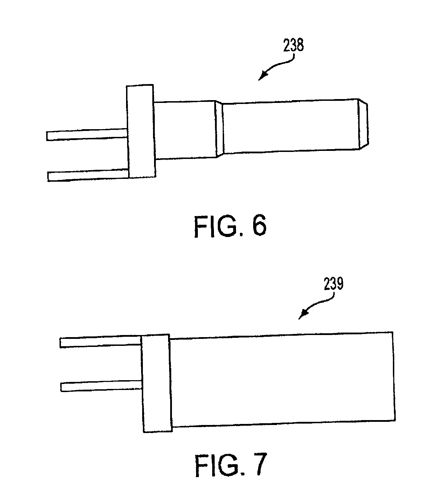

Referring to Figure 2, to achieve the above described matrix interconnection of the first switching modules 217 with the signal splitter module 205, the signal splitter module 205 comprises a housing 236 which is generally rectangular in shape with the first connector 212 mounted at the center of one of the shorter (minor axis) sides of the rectangle. The second connectors 215 of the signal splitter module 205 are divided into two groups and are equally spaced on opposite long (major axis) sides of the rectangular shaped housing. Both the first connector 212 and the second connectors 215 on the signal splitter module 205 are male coaxial quick disconnect connectors 238 of the type illustrated in Figure 6.

Referring to Figure 3, the first switching module 217 also comprises a generally rectangular shaped housing 237. The first connectors 222 are evenly spaced about a central point of one long (major axis) side of the first switching module housing 237. The second connectors 225 are positioned on the other long (major axis) side of the housing 237 with the ground connector 231, the power connector 232 and the control connector 235. All of the connectors on the first switching module 217 are female coaxial quick disconnect connectors 239 of the type illustrated in Figure 7.

The male and female coaxial quick disconnect connectors 238, 239 illustrated in Figures 6 and 7 may be selected from known connectors which are designed for interconnection with one another for providing a connection therebetween. The dimensions of the connectors are selected such that when the male and female connectors are interconnected, there is sufficient friction therebetween to provide a strong and secure connection without the requirement of threads or other interlocking means.

Referring now to Figures 2, 3 and 5, the arrangement of the second connectors 225 on the first switching module 217 is selected such that when the signal splitter modules 205 are arranged adjacent to one another with the rows of second connectors 215 parallel to one another, the second connectors 226 of a first switching module 217 placed perpendicular to the parallel rows of second connectors 215 of the signal splitter module 205 will engage with one another.

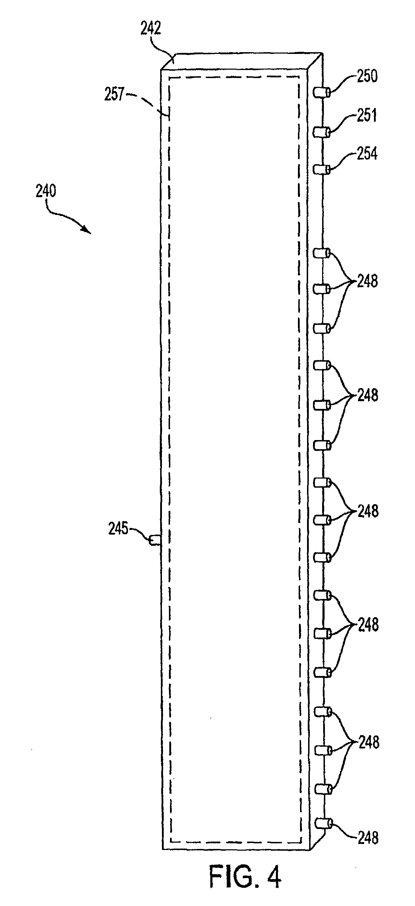

Referring again to Figure 1, a plurality (Y) of second switching modules 240 are also provided for interconnection with the signal splitter modules 205. Referring also to Figure 4, the second switching module 240 comprises a generally rectangular shaped housing 242. Mounted on one of the long (major axis) sides of the housing 242 is a first connector 245, and mounted on the other long (major axis) side of the housing is a plurality (N) of second connectors 248, a ground connector 250, a power connector 251 and a control connector 254. Located within the second switching module housing 242 is an electronic switch 257 which is interconnected to all of the connectors 245, 248, 250, 251, 254 mounted on the second switching module 240. The electronic switch 257 is a one-pole-N-throw switch which interconnects the first connector 245 to any one of the second connectors 248 under control of control signals provided via the control connector 254, as will be described in greater detail hereinafter. The electronic switch 257 may be a one-pole-sixteen-throw electronic switch SW9480 manufactured by the Celwave Division of Radio Frequency Systems, Inc., which is powered by a 15VDC power supply and is controlled by a pulse width modulated data stream containing both timing (clock) data and control (switching) data.

Referring again to Figure 1, the first connector 245 (Figure 4) on each of the second switching modules 140 is connected to a corresponding RF scanning receiver 260. Associated with each RF scanning receiver 260 is a phase locked loop (PLL) device 263 and a micro-controller 267, e.g., a HC11F1 (PLL) manufactured by Motorola. As will be described in greater detail hereinafter, the micro-controller 267 controls the phase locked loop 263, which in turn controls the receiving frequency of the RF scanning receiver so as to sequentially receive RF signals at selected frequencies associated with certain ones of the radio channel units 203, and the micro-controller 267 also controls the second switching module 240 to sequentially interconnect the RF scanning receiver 260 with the antennas 202 via the splitters 205. The RF scanning receiver 260 then determines which antennas 202 have the strongest signal strength at the operating frequencies of the selected radio channel units 203, and provides an indication thereof to the micro-controller 267. The micro-controller 267 then controls the first switching modules 217 of the selected radio channel units 203 to interconnect with the two antennas 202 having the strongest signal strength.

Referring again to Figures 2, 4 and 5, as with the first switching modules 217, all of the second connectors 248 on the second switching modules 240 are female coaxial quick disconnect connectors 239 of the type illustrated in Figure 7. Additionally, as with the first switching modules 217, the second connectors 248 on the second switching module 240 are arranged such that when placed perpendicular to the rows of second connectors 215 on the signal splitter module 205, the second connectors 248, 215 interconnect with one another.

The operation of the radio signal receive modular interconnect matrix 200 is best understood by example. Referring to Figure 1, fifteen (15) first switching modules 217 are provided for connection to fifteen (15) corresponding radio channel units 203. The radio channel units 203 and first switching modules 217 are divided into groups of equal numbers, and each group is associated with a corresponding second switching module 240, RF scanning receiver 260, micro-controller 267 and phrase locked loop 263. In the example of Figure 1, the first switching modules 217 and radio channel units 203 are divided into five groups of three. Therefore, there are five second switching modules 240, RF scanning receivers 260, phase locked loops 263 and microcontrollers 267.

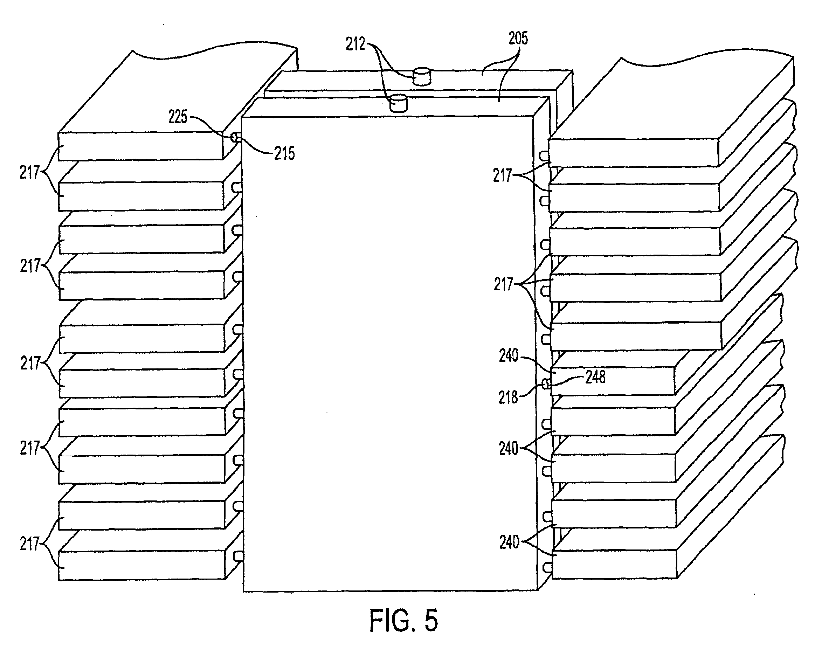

There are 16 signal splitter modules 205, one being associated with each antenna 202. Each of the signal splitter modules 205 comprises twenty second connectors 215. On each of the signal splitter modules 205, fifteen of the second connectors are provided for interconnection with the fifteen first switching modules 217, and the remaining five second connectors 215 on the signal splitter module 205 are provided for interconnection with the five second switching modules 240. The interconnection of the signal splitter modules 205, first switching modules 217 and second switching modules 240 is illustrated in Figure 5. The signal splitter modules 205 are arranged adjacent to each other with the two rows of second connectors 215 on each signal splitter module 205 arranged parallel to the rows of second connectors 215 on the other signal splitter modules 205. Ten of the first switching modules 217 are arranged adjacent to one another with their rows of second connectors 225 parallel to one another and perpendicular to the rows of second connectors 215 on the signal splitter modules 205. The male and female coaxial quick disconnect connectors 238, 239 (Figures 6 and 7) are then interconnected with one another such that at least one of the second connectors 225 on each of the ten first switching modules 217 is interconnected with at least one of the second connectors 215 on each of the sixteen signal splitter modules 205. The remaining five first switching modules 217 and the five second switching modules 240 are arranged in a like manner on an opposite side of the sixteen adjacent signal splitter modules 205.

Using the above described modular interconnect matrix, various relationships are established based on the following parameters:
- N =: the number of antennas.
- M =: the number of radio channel units.
- Y =: the number of groups the radio channel units are arranged in.

The relationships established by the above recited parameters include:
- The number of signal splitter modules =: N
- The number of first switching modules =: M
- The number of second switching modules =: Y
- The number of second connectors on the first and second switching modules =: N
- The number of second connectors on the signal splitter modules =: X = (M + Y)

Each micro-controller 267 controls a corresponding phase locked loop 263, second switching module 240 and three first switching modules 217 in each one of the five groups. Each radio channel unit 203 transmits and receives RF signals on an assigned (operating) frequency, and the phase locked loop 263 is configured to control the receiving frequency of the RF scanning receiver for sequentially receiving RF signals at three different frequencies, each of the three frequencies corresponding to the operating frequencies of the three radio channel units in its corresponding group. Under control of the micro-controller 267, the second switching module 240 selects one of the sixteen antennas 202. The signals provided by the antenna 202 are provided via the band pass filter 208 to the adjustable amplifier 210 where the received signals are amplified. Next the received signal is provided to the corresponding signal splitter module 205 where the signal is divided into 20 equal parts. One of the equal parts is provided to each of the second switching modules 240.

A control signal is provided on a line 270 from the micro-controller 267 to the control terminal 254 (Figure 4) of the second switching module 240 for controlling the position of the one-pole-sixteen-throw switch 257 (Figure 4) of the second switching module 240 for antenna selection. The part of the amplified RF signal from the selected antenna is provided via the first connector 245 (Figure 4) of the second switching module 240 to a line 272 which is connected to the RF scanning receiver 260. The micro-controller also provides control signals on a line 275 to the phase locked loop 263 once an antenna has been selected to control the phase locked loop to in turn control the receiving frequency of RF scanning receiver 260 so as to sequentially receive RF signals at the three different frequencies corresponding to the three radio channel units within the corresponding group. Control signals are provided by the phase locked loop to the RF scanning receiver 260 on a line 278. First, the RF scanning receiver 260 measures the power level of the RF signal on the line 272 at the first frequency under control of the phase locked loop. The RF scanning receiver provides a signal on a line 280 to the micro-controller 267 indicative of the power level of the signal on the line 272 at the first frequency. The micro-controller 267 then provides a control signal on the line 275 to the phase locked loop 263, which in turn controls the RF scanning receiver 260 to receive RF signals at the second frequency. The RF scanning receiver then provides a second measurement of the power level of the received signal at the second excitation frequency on the line 280 to the micro-controller 267. This procedure is repeated for the third frequency.

After measurements are taken on one antenna at the three different excitation frequencies, the micro-controller provides a control signal on the line 270 to the second switching module 240 for selection of the next antenna 202. The signal provided by the next antenna 202 is then measured at the three excitation frequencies and these measurements are recorded by the micro-controller 267. This procedure is repeated for all sixteen antennas 202. Each antenna 202 is sampled at all three frequencies approximately 8 times per second. The micro-controller 267 maintains a running average of the received signal strength at the three radio channel unit operating frequencies for all sixteen antennas, and provides a control signal on a line 285 to each of the first switching modules 217 in the corresponding group indicative of the two antennas having the strongest signal strength at the operating frequency of the corresponding radio channel unit. The electronic two-pole-16-throw switch 230 (Figure 3) in the first switching module 217 connects two of the second connectors 225 (Figure 3) to the two first connectors 222 (Figure 3) in response to the control signal on the line 285 from the micro-controller 267. As is known in the art, the radio channel unit diversity amplifier then selects between the two input signals for providing an input to the receiver.

Since the antennas 202 are directional antennas, the micro-controller controls the second switching module 240 to sample the antennas 202 so that adjacent antennas are not consecutively sampled, but rather, antennas from different direction quadrants are sampled consecutively. For example, if the antennas are sequentially numbered 1-16, the antennas may be sampled in the following order: 1, 4, 7, 10, 13, 16, 3, 6, 9, 12, 15, 2, 5, 8, 11, 14.

The invention has been described thus far with respect to a radio signal receive modular interconnect matrix. However, the invention is also applicable to a radio signal transmit modular interconnect matrix, e.g., a modular interconnect matrix used to interconnect a plurality of radio channel units with a plurality of antennas for the transmission of signals provided by the radio channel units via the antennas.

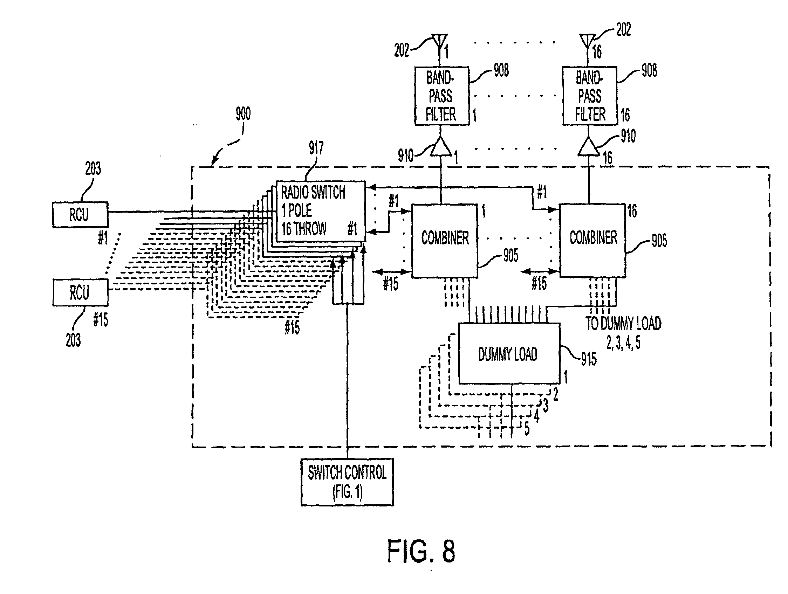

Referring to Figure 8, a transmit modular interconnect matrix 900 is similar to the receive modular interconnect matrix 200 (Figure 1) except that the first switching module 917 is provided with one first connector for interconnection to a transmit terminal of a radio channel unit 203. Additionally, the signal splitter modules 205 (Figure 1) are replaced with combiner modules 905 which combine RF signals provided to its plurality of second connectors into a combined RF signal which is provided from the first connector via an amplifier 910 and filter 908 to an antenna 202 for transmission. It is assumed that the antenna 202 indicated as having the strongest received signal strength at the operating frequency of the radio channel unit is the best antenna for transmission of signals provided by the radio channel unit, and therefore, a second switching module and corresponding scanning receiver phase locked loop and micro-controller are not required in the transmit matrix interconnect module 900. Instead, each first switching module of the transmit matrix interconnect module is controlled to interconnect its first connector with its second connector corresponding with the antenna having the strongest signal strength at the operating frequency of the corresponding radio channel unit. Additionally, since the five second switching modules are not required in the transmit modular interconnect matrix 900, the combiner modules 905 may be configured for connection with five dummy loads 915 mounted to the five second connectors which are not used. Alternatively, each combiner module 905 may be provided with only 15 second connectors for interconnection with the 15 first switching modules.

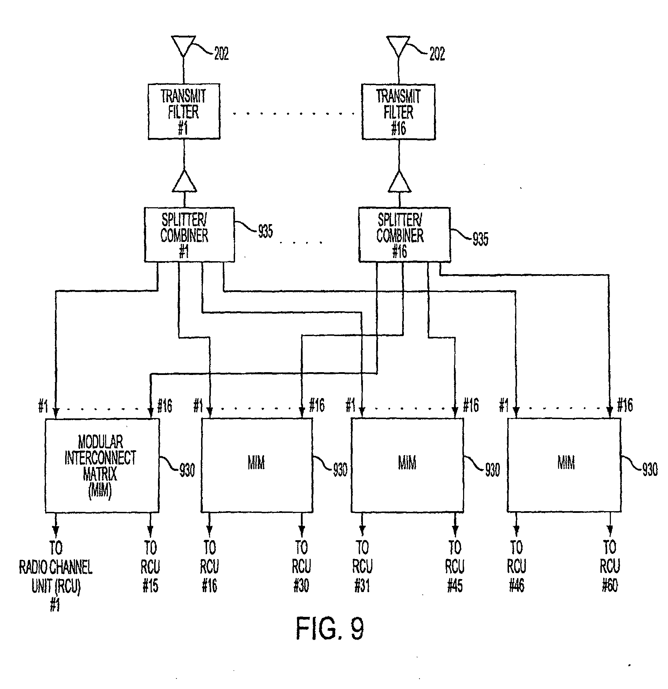

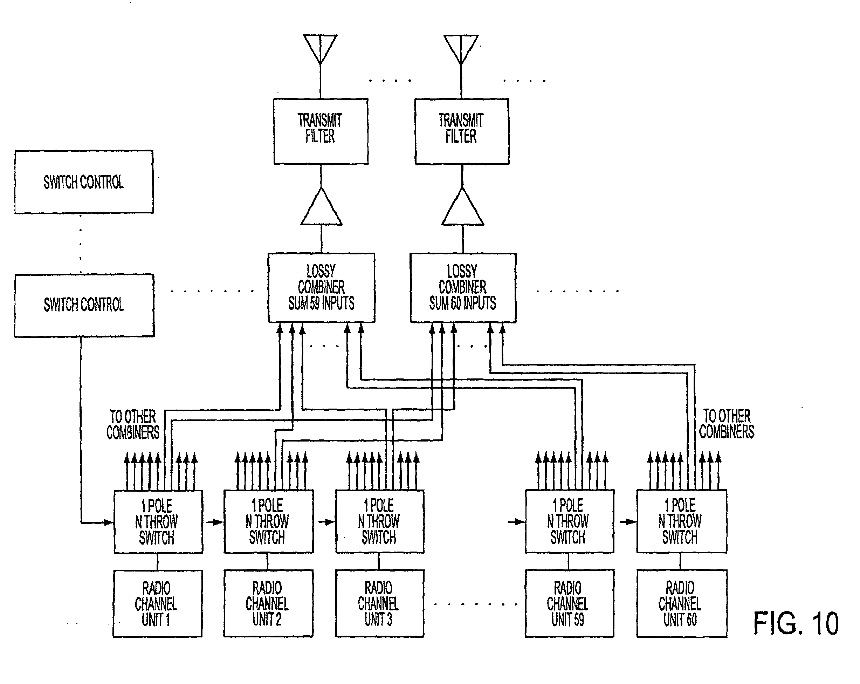

The invention has been described thus far for interconnecting 15 radio channel units with the 16 antennas. If it is desired to increase the number of radio channel units or the number of antennas, the modular components may be modified accordingly. Alternatively, a plurality of modular interconnect matrices may be provided to increase the number of radio channel units. For example, referring to Figure 9, four modular interconnect matrices 930 may be provided, each for interconnection to 15 radio channel units and sixteen antennas 202. Each of the modular interconnect matrices 930 may be connected to the antennas 202 via a second combiner or splitter 935 for achieving the desired total number of radio channel units and antennas. As shown in Figure 10, there are four modular interconnect matrices 930 each having 15 radio channel units for a total of 60 radio channel units interconnected to 16 antennas.

The invention has been described herein as using modules which directly interconnect with one another for providing the matrix connection of any one of a plurality of antennas with any one of a plurality of radio channel units. However, in another embodiment of the invention, rather than providing interconnecting modules for creating the matrix, the components of the matrix connection may be interconnected with known coaxial cables. An example of such a matrix connection (transmit matrix) using coaxial cables is schematically illustrated in Figure 10. In a RF signal transmit interconnection having 60 switches associated with 60 radio channel units with 16 antennas via 16 combiners, 960 coaxial cables are required between the combiners and the switches. Similarly, 960 coaxial cables are required between 60 switches and 16 splitters for RF signals received by the 16 antennas. Although this embodiments provides the desired matrix connection of the radio channel units and the antennas, the physical mass of cabling and the cost of connectors, cable, and cable assembly and inspection is significant.

## Claims

1. A modular interconnect matrix (200) for matrix connection of a first plurality of antennas with a second plurality of radio channel units, wherein the antennas and the radio channel units transmit and receive RF signals at assigned operating frequencies, comprising:
a third plurality of first switching modules (217), each having at least one first switching connector and a plurality of second switching connectors, each first switching module being connected by its first switching connector to a corresponding radio channel unit (203);
first switching means (230) in each one of said first switching modules for connecting each one of said first switching connectors with any one of said second switching connectors;
a fourth plurality of antenna interface modules 205, each having a first interface connector and a plurality of second interface connectors, each antenna interface module being connected by its first interface connector to a corresponding antenna (202);
wherein said second switching connectors are dimensioned for interconnection with said second interface connectors; **characterized in that**
said second switching connectors and said second interface connectors are arranged on the respective first switching modules (217) and antenna interface modules (205) for interconnection of at least one of said second switching connectors on each of said first switching modules with at least one of said second interface connectors on each of said antenna interface modules (205).

2. A modular interconnect matrix according to claim 1 further comprising switch control means for controlling (267) said first switching means.

3. A modular interconnect matrix according to claim 2, wherein said switch control means comprises:
at least one second switching module (240) having a first control connector and a plurality of second control connectors, said second control connectors being dimensioned for interconnection with said second interface connectors, and said second control connectors and said second interface connectors being arranged on the respective second switching modules and antenna interface modules for interconnection of at least one of said second control connectors on each of said second switching modules with at least one of said second interface connectors on each of said antenna interface modules;
second switching means in each of said second switching modules for connecting each first control connector with any one of said second control connectors;
frequency control means (263) for sequentially providing frequency control signals each indicative of the operating frequencies of the radio channel units;
scanning receiver means (260) connected to said first connector of a corresponding one of said second switching modules, said scanning receiver means being responsive to said frequency control signals and to RF signals provided by said antenna interface modules for providing signal strength signals indicative of the signal strength of said RF signals at the operating frequencies of the radio channel units; and
at least one controller (267) responsive to said signal strength signals for determining the antenna having the strongest signal strength of the received RF signals at the operating frequency of each radio channel unit, said controllers providing control signals to said first switching means for interconnecting each first switching connector with one of said second switching connectors such that each radio channel unit is connected with the antenna indicated as having the strongest signal strength of the received RF signals at the operating frequency of the radio channel unit.

4. A modular interconnect matrix according to claim 3 wherein:
each radio channel unit is assigned to one group of a plurality of groups;
each second switching module is assigned to a corresponding one of said groups;
one of said frequency control means is assigned to each scanning receiver means, each frequency control means sequentially providing frequency control signals to a corresponding one of said scanning receiver means at the operating frequencies of the radio channel units in said corresponding one of said groups; and
one of said controllers is assigned to each scanning receiver means, each controller providing said control signals to said first switching means which are connected to radio channel units in said corresponding one of said groups.

5. A modular interconnect matrix according to claim 4 wherein each controller provides second control signals to said second switching means of a corresponding second switching module for interconnecting said first control connector to each one of said second control connectors of said corresponding second switching module in a predetermined sequence.

6. A modular interconnect matrix according to claim 5 wherein, between each second control signal in said predetermined sequence, each controller controls a corresponding frequency control means to sequentially provide said frequency control signals to said corresponding one of said scanning receiver means, said frequency control signals corresponding to the operating frequency of each radio channel unit in said corresponding one of said groups.

7. A modular interconnect matrix according to claim 6, wherein each of said first switching connectors on said first switching modules are connected to a receive terminal on said corresponding one of the radio channel units, and wherein said antenna interface modules are signal splitter modules each of which divides an RF signal received at its first interface connector from said corresponding antenna into a plurality of divided RF signals each having an equal signal strength which is a fraction of the signal strength of said RF signal, said divided RF signals being provided to said second interface connectors.

8. A modular interconnect matrix according to claim 6, wherein each of said first switching connectors on said first switching modules are connected to a transmit terminal on said corresponding one of the radio channel unit, and wherein each antenna interface module includes a signal combiner module which combines RF signals received at its second interface connectors from said transmit terminals into a combined RF signal which is provided to said first interface connector for transmission by said corresponding antenna and also include a signal splitter module which divides an RF signal received at its first interface connector from said corresponding antenna into a plurality of divided RF signals each having an equal signal strength which is a fraction of the signal strength of said RF signal, said divided RF signals being provided to said second interface connectors, said second interface connectors on said signal splitter modules being corrected to said second control connectors.

9. A modular interconnect matrix according to claim 6 wherein the radio channel units each comprise a diversity receiver having two receive terminals for receiving RF signals, wherein each of said first switching modules has two first switching connectors which are connected to a corresponding one of said receive terminals on said corresponding one of the radio channel units, wherein said antenna interface modules are signal splitter modules each of which divides an RF signal received at its first interface connector from said corresponding antenna into a plurality of divided RF signals each having an equal signal strength which is a fraction of the signal strength of said RF signal, said divided RF signals being provided to said second interface connectors, and wherein said controllers provide control signals to said first switching means in each of said first switching modules for interconnecting said first switching connectors with two of said second switching connectors such that one of said receive terminals on said corresponding one of the radio channel units is interconnected with the antenna having the strongest signal strength of the received RF signals at the operating frequency of said corresponding one of the radio channel units and another of said receive terminals on said corresponding one of the radio channel units is interconnected with the antenna having the second strongest signal strength of the received RF signals at the operating frequency of said corresponding one of the radio channel units.

## Patentansprüche

1. Modulare Verbindungsmatrix (200), um eine erste Vielzahl von Antennen mit einer zweiten Vieizahl von Funkkanaleinheiten über eine Matrix zu verbinden, wobei die Antennen und die Funkkanaleinheiten HF-Signale bei zugewiesenen Betriebsfrequenzen senden und empfangen, die Folgendes umfasst:
eine dritte Vielzahl von ersten Schaltmodulen (217), von denen jedes mindestens einen ersten Schaltanschluss und eine Vielzahl von zweiten Schaltanschlüssen hat, wobei jedes erste Schaltmodul über seinen ersten Schaltanschluss mit einer entsprechenden Funkkanaleinheit (203) verbunden wird;
erste Schaltmittel (230) in jedem der ersten Schaltmodule, um jeden der ersten Schaltanschlüsse mit einem beliebigen der zweiten Schaltanschlüsse zu verbinden;
eine vierte Vielzahl von Antennenschnittstellenmodulen (205), von denen jedes einen ersten Schnittstellenanschluss und eine Vielzahl von zweiten Schnittstellenanschlüssen hat, wobei jedes Antennenschnittstellenmodul über seinen ersten Schnittstellenanschluss mit einer entsprechenden Antenne (202) verbunden wird;
wobei die zweiten Schaltanschlüsse so dimensioniert sind, dass sie sich mit den zweiten Schnittstellenanschlüssen verbinden lassen;
**dadurch gekennzeichnet, dass**
die zweiten Schaltanschlüsse und die zweiten Schnittstellenanschlüsse an den entsprechenden ersten Schaltmodulen (217) und Antennenschnittstellenmodulen (205) angeordnet sind, um mindestens einen der zweiten Schaltanschlüsse an jedem der ersten Schaltmodule mit mindestens einem der zweiten Schnittstellenanschlüsse an jedem der Antennenschnittstellenmodule (205) zu verbinden.

2. Modulare Verbindungsmatrix nach Anspruch 1, die des Weiteren Schaltersteuermittel zur Steuerung (267) des ersten Schaltmittels umfasst.

3. Modulare Verbindungsmatrix nach Anspruch 2, wobei die Schaltersteuermittel Folgendes umfassen:
mindestens ein zweites Schaltmodul (240), das einen ersten Steueranschluss und eine Vielzahl von zweiten Steueranschlüssen hat, wobei die zweiten Steueranschlüsse so dimensioniert sind, dass sie mit den zweiten Schnittstellenanschlüssen verbunden werden können, und wobei die zweiten Steueranschlüsse und die zweiten Schnittstellenanschlüsse an den entsprechenden zweiten Schaltmodulen und Antennenschnittstellenmodulen angeordnet sind, um mindestens einen der zweiten Steueranschlüsse an jedem der zweiten Schaltmodule mit mindestens einem der zweiten Schnittstellenanschlüsse an jedem der Anten nenschnittstellenmodule zu verbinden;
zweite Schaltmittel in jedem der zweiten Schaltmodule, um jeden ersten Steueranschluss mit einem beliebigen der zweiten Steueranschlüsse zu verbinden;
Frequenzsteuermittel (263), um nacheinander Frequenzsteuersignale bereitzustellen, von denen jedes die Betriebsfrequenzen der Funkkanaleinheiten anzeigt;
Abtastempfängermittel (260), die mit dem ersten Anschluss eines entsprechenden der zweiten Schaltmodule verbunden werden, wobei die Abtastempfängermittel auf die Frequenzsteuersignale und auf HF-Signale ansprechen, die von den Antennenschnittstellenmodulen bereitgestellt werden, um Signalstärkesignale bereitzustellen, die die Signalstärke der HF-Signale bei den Betriebsfrequenzen der Funkkanaleinheiten anzeigen; und
mindestens eine Steuereinheit (267), die auf die Signalstärkesignale anspricht, um die Antenne zu ermitteln, die bei der Betriebsfrequenz einer jeden Funkkanaleinheit die größte Signalstärke bei den empfangenen HF-Signalen aufweist, wobei die Steuereinheiten dem ersten Schaltmittel Steuersignale bereitstellen, um einen jeden ersten Schaltanschluss mit einem der zweiten Schaltanschlüsse so zu verbinden, dass jede Funkkanaleinheit mit der Antenne verbunden wird, die als die Antenne angegeben wird, die bei der Betriebsfrequenz der Funkkanaleinheit die größte Signalstärke bei den empfangenen HF-Signalen aufweist.

4. Modulare Verbindungsmatrix nach Anspruch 3, wobei:
jede Funkkanaleinheit einer Gruppe einer Vielzahl von Gruppen zugeordnet wird;
jedes zweite Schaltmodul einer entsprechenden der Gruppen zugeordnet wird;
eines der Frequenzsteuermittel jedem Abtastempfängermittel zugeordnet wird,
jedes Frequenzsteuermittel einem entsprechenden der Abtastempfängermittel bei den Betriebsfrequenzen der Funkkanaleinheiten in der entsprechenden der Gruppen nacheinander Frequenzsteuersignale bereitstellt; und
eine der Steuereinheiten jedem Abtastempfängermittel zugeordnet wird, wobei jede Steuereinheit die Steuersignale den ersten Schaltmitteln bereitstellt, die mit Funkkanaleinheiten in der entsprechenden der Gruppen verbunden sind.

5. Modulare Verbindungsmatrix nach Anspruch 4, wobei jede Steuereinheit den zweiten Schaitmitteln eines entsprechenden zweiten Schaltmoduls zweite Steuersignale bereitstellt, um den ersten Steueranschluss mit jedem der zweiten Steueranschlüsse des entsprechenden zweiten Schaltmoduls in einer vorher festgelegten Reihenfolge zu verbinden.

6. Modulare Verbindungsmatrix nach Anspruch 5, wobei jede Steuereinheit zwischen jedem zweiten Steuersignal in der vorher festgelegten Reihenfolge ein entsprechendes Frequenzsteuermittel steuert, um die Frequenzsteuersignale nacheinander dem entsprechenden der Abtastempfängermittel bereitzustellen, wobei die Frequenzsteuersignale der Betriebsfrequenz einer jeden Funkkanaleinheit in der entsprechenden der Gruppen entsprechen.

7. Modulare Verbindungsmatrix nach Anspruch 6, wobei jeder der ersten Schaltanschlüsse an den ersten Schaltmodulen mit einem Empfangsgerät an der entsprechenden der Funkkanaleinheiten verbunden wird und wobei die Antennenschnittstellenmodule Signalteilermodule sind, von denen jedes ein an seinem ersten Schnittstellenanschluss von der entsprechenden Antenne empfangenes HF-Signal in eine Vielzahl von geteilten HF-Signalen teilt, von denen jedes die gleiche Signalstärke aufweist, die ein Bruchteil der Signalstärke des HF-Signals ist, wobei die geteilten HF-Signale den zweiten Schnittstellenanschlüssen bereitgestellt werden.

8. Modulare Verbindungsmatrix nach Anspruch 6, wobei jeder der ersten Schaltanschlüsse an den ersten Schaltmodulen mit einem Sendegerät an der entsprechenden der Funkka naleinheiten verbunden wird und wobei jedes Antennenschnittstellenmodul ein Signalverknüpfungsmodul enthält, das von den Sendegeräten an seinen zweiten Schnittstellenanschlüssen empfangene HF-Signale zu einem kombinierten HF-Signal verknüpft, das dem ersten Schnittstellenanschluss bereitgestellt wird, um von der entsprechenden Antenne gesendet zu werden, und das auch ein Signalteilermodul enthält, das ein von der entsprechenden Antenne an seinem ersten Schnittstellenanschluss empfangenes HF-Signal in eine Vielzahl von geteilten HF-Signalen teilt, von denen jedes die gleiche Signalstärke aufweist, die ein Bruchteil der Signalstärke des HF-Signals ist, wobei die geteilten HF-Signale den zweiten Schnittstellenanschlüssen bereitgestellt werden, wobei die zweiten Schnittstellenanschlüsse an den Signalteilermodulen mit den zweiten Steueranschlüssen verbunden sind.

9. Modulare Verbindungsmatrix nach Anspruch 6, wobei jede der Funkkanaleinheiten einen Diversity-Empfänger umfasst, der zwei Empfangsgeräte zum Empfang von HF-Signalen hat, wobei jedes der ersten Schaltmodule zwei erste Schaltanschlüsse hat, die mit einem entsprechenden der Empfangsgeräte an der entsprechenden der Funkkanaleinheiten verbunden werden, wobei die Antennenschnittstellenmodule Signalteilermodule sind, von denen jedes ein von der entsprechenden Antenne an seinem ersten Schnittstellenanschluss empfangenes HF-Signal in eine Vielzahl von geteilten HF-Signalen teilt, von denen jedes die gleiche Signalstärke aufweist, die ein Bruchteil der Signalstärke des HF-Signals ist, wobei die geteilten HF-Signale den zweiten Schnittstellenanschlüssen bereitgestellt werden, und wobei die Steuereinheiten dem ersten Schaltmittel in jedem der ersten Schaltmodule Steuersignale bereitstellen, um die ersten Schaltanschlüsse mit zwei der zweiten Schaltanschlüsse so zu verbinden, dass eines der Empfangsgeräte an der entsprechenden der Funkkanaleinheiten mit der Antenne verbunden wird, die bei der Betriebsfrequenz der entsprechenden der Funkkanaleinheiten die größte Signalstärke bei den empfangenen HF-Signalen aufweist, und ein anderes der Empfangsgeräte an der entsprechenden der Funkkanaleinheiten mit der Antenne verbunden wird, die bei der Betriebsfrequenz der entsprechenden der Funkkanaleinheiten die zweitgrößte Signalstärke bei den empfangnen HF-Signalen aufweist.

## Revendications

1. Réseau d'interconnexion modulaire (200) permettant la connexion en réseau d'un premier ensemble d'antennes avec un second ensemble d'unités de canaux radio, dans lequel les antennes et les unités de canaux radio transmettent et reçoivent des signaux RF à des fréquences de fonctionnement assignées, comprenant :
un troisième ensemble de premiers modules de commutation (217), chacun d'eux disposant d'au moins un premier connecteur de commutation et d'un ensemble de seconds connecteurs de commutation, chaque premier module de commutation étant connecté à l'aide de son premier connecteur de commutation à une unité de canal radio correspondante (203) ;
des premiers dispositifs de commutation (230) dans chacun desdits premiers modules de commutation pour la connexion de chacun desdits premiers connecteurs de commutation à chacun desdits seconds connecteurs de commutation ;
un quatrième ensemble de modules d'interface d'antenne (205), chacun disposant d'un premier connecteur d'interface et d'un ensemble de seconds connecteurs d'interface, chaque module d'interface d'antenne étant connecté par son premier connecteur d'interface à une antenne correspondante (202);
dans lequel lesdits seconds connecteurs de commutation sont dimensionnés pour permettre l'interconnexion avec lesdits seconds connecteurs d'interface ; **caractérisés par le fait que**
lesdits seconds connecteurs de commutation et lesdits seconds connecteurs d'interface sont disposés sur les premiers modules de commutation (217) et modules d'interface d'antenne (205) respectifs, pour réaliser l'interconnexion d'au moins un desdits seconds connecteurs de commutation sur chacun desdits premiers modules de commutation avec au moins un desdits seconds connecteurs d'interface sur chacun desdits modules d'interface d'antenne (205).

2. Réseau d'interconnexion modulaire selon la revendication 1 comprenant en plus des commandes de commutation destinées à commander (267) lesdits premiers dispositifs de commutation.

3. Réseau d'interconnexion modulaire selon la revendication 2, dans lequel lesdits dispositifs de commande de commutation comprennent :
au moins un second module de commutation (240) doté d'un premier connecteur de commande et d'un ensemble de seconds connecteurs de commande, lesdits seconds connecteurs de commande étant dimensionnés pour permettre l'interconnexion avec lesdits seconds connecteurs d'interface, et lesdits seconds connecteurs de commande, et lesdits seconds connecteurs d'interface étant disposés sur les seconds modules de commutation et modules d'interface d'antenne respectifs, pour réaliser l'interconnexion d'au moins un desdits seconds connecteurs de commande sur chacun desdits seconds modules de commutation avec au moins un desdits seconds connecteurs d'interface sur chacun desdits modules d'interface d'antennes ;
des seconds dispositifs de com mutation dans chacun des seconds modules de commutation pour la connexion de chaque premier connecteur de commande à chacun desdits seconds connecteurs de commande ;
des dispositifs de commande de la fréquence (263) destinés à fournir de manière séquentielle des signaux de commande de fréquence, chacun d'eux indiquant les fréquences de fonctionnement des unités de canaux radio ;
des dispositifs de réception à balayage (260) connectés audit premier connecteur d'un desdits seconds modules de commutation correspondants, lesdits dispositifs de réception à balayage étant sensibles auxdits signaux de commande de la fréquence et aux signaux RF fournis par lesdits modules d'interface d'antenne destinés à fournir des signaux d'intensité de réception indiquant l'intensité de réception desdits signaux RF pour les fréquences de fonctionnement des unités de canaux radio ; et
au moins un contrôleur (267) sensible auxdits signaux d'intensité de réception permettant de déterminer l'antenne ayant l'intensité de réception la plus forte parmi les signaux RF reçus à la fréquence de fonctionnement de chaque unité de canal radio, lesdits contrôleurs fournissant des signaux de commande auxdits premiers dispositifs de commutation pour l'interconnexion de chaque premier connecteur de commutation avec l'un desdits seconds connecteurs de commutation, de telle sorte que chaque unité de canal radio soit connectée avec l'antenne ayant l'intensité de réception la plus forte des signaux RF reçus à la fréquence de fonctionnement de l'unité de canal radio.

4. Réseau d'interconnexion modulaire selon la revendication 3, dans lequel
chaque unité de canal radio est affectée à un seul groupe d'un ensemble de groupes ;
chaque second module de commutation est affecté à un module correspondant desdits groupes ;
un seul desdits dispositifs de commande de la fréquence est affecté à chaque dispositif de réception à balayage, chaque dispositif de commande de la fréquence fournissant de manière séquentielle des signaux de commande de fréquence à un seul desdits dispositifs de réception à balayage correspondants, aux fréquences de fonctionnement des unités de canaux radio dudit groupe correspondant dudit ensemble de groupes et
un seul desdits contrôleurs est affecté à chaque dispositif de réception à balayage, chaque contrôleur fournissant lesdits signaux de commande auxdits premiers dispositifs de commutation qui sont connectés aux unités de canaux radio dans ladite unité correspondante dudit ensemble de groupes.

5. Réseau d'interconnexion modulaire selon la revendication 4, dans lequel chaque contrôleur fournit des seconds signaux de commande auxdits seconds dispositifs de commutation d'un second module de commutation correspondant pour réaliser l'interconnexion dudit premier connecteur de commande avec chacun desdits seconds connecteurs de commande dudit second module de commutation correspondant, dans une séquence prédéfinie.

6. Réseau d'interconnexion modulaire selon la revendication 5, où, entre chaque second signal de commande dans ladite séquence prédéfinie, chaque contrôleur commande un dispositif de commande de la fréquence correspondant pour fournir de manière séquentielle lesdits signaux de commande de fréquence audit dispositif correspondant desdits dispositifs de réception à balayage, lesdits signaux de commande de fréquence correspondant à la fréquence de fonctionnement de chaque unité de canal radio dans ledit groupe correspondant dudit ensemble de groupes.

7. Réseau d'interconnexion modulaire selon la revendication 6, dans lequel chacun desdits premiers connecteurs de commutation situé sur lesdits premiers modules de commutation est connecté à un terminal de réception sur ladite unité correspondante des unités de canaux radio, et dans lequel lesdits modules d'interface d'antenne sont des modules répartiteurs de signaux, chacun d'eux répartissant un signal RF reçu sur son premier connecteur d'interface de ladite antenne correspondante en un ensemble de signaux RF répartis, chacun ayant une intensité de réception égale correspondant à une fraction de l'intensité de réception dudit signal RF, lesdits signaux RF répartis étant fournis aux seconds connecteurs d'interface.

8. Réseau d'interconnexion modulaire selon la revendication 6, dans lequel chacun desdits premiers connecteurs de commutation situé sur lesdits premiers modules de commutation est connecté à un terminal de transmission sur ladite unité correspondante des unités de canaux radio et dans lequel chaque module d'interface d'antenne inclut un module de combinaison de signaux qui combine les signaux RF reçus sur ses seconds connecteurs d'interface en provenance des terminaux de transmission en un signal RF combiné qui est fourni audit premier connecteur d'interface pour la transmission par ladite antenne correspondante et inclut également un module répartiteur de signaux qui répartit un signal RF reçu sur le premier connecteur d'interface de ladite antenne correspondante en un ensemble de signaux RF répartis, chacun ayant une intensité de réception égale qui est une fraction de l'intensité de réception dudit signal RF, lesdits signaux RF répartis étant fournis aux seconds connecteurs d'interface, lesdits seconds connecteurs d'interface situés sur lesdits modules répartiteurs de signaux étant corrigés par rapport aux seconds connecteurs de commande.

9. Réseau d'interconnexion modulaire selon la revendication 6, dans lequel les unités de canaux radio comprennent chacune un récepteur en diversité ayant deux terminaux de réception destinés à la réception des signaux RF, dans lequel chacun desdits premiers modules de commutation est doté de deux premiers connecteurs de commutation qui sont connectés à un connecteur correspondant desdits terminaux de réception, sur ledit terminal correspondant des unités de canaux radio, dans lequel lesdits modules d'interface d'antenne sont des modules répartiteurs de signaux, chacun d'eux répartissant un signal RF reçu sur son premier connecteur d'interface de l'antenne correspondante en un ensemble de signaux RF répartis, chacun ayant une intensité de réception égale correspondant à une fraction de l'intensité de réception dudit signal RF, lesdits signaux RF répartis étant fournis aux seconds connecteurs d'interface, et dans lequel lesdits contrôleurs fournissent des signaux de commande audits premiers dispositifs de commutation dans chacun desdits premiers modules de commutation pour réaliser l'interconnexion desdits premiers connecteurs de commutation avec deux desdits seconds connecteurs de commutation, de sorte qu'un seul desdits terminaux de réception sur ledit terminal correspondant des unités de canaux radio soit connecté à l'antenne ayant l'intensité de réception la plus forte parmi les signaux RF reçus à la fréquence de fonctionnement de ladite unité correspondante des unités de canaux radio et qu'un autre desdits terminaux de réception sur l'unité correspondante des unités de canaux radio soit connectée à l'antenne ayant l'intensité de réception la plus forte parmi les signaux RF reçus à la fréquence de fonctionnement de ladite unité correspondante des unités de canaux radio.
